# EUROPEAN PATENT APPLICATION

(11) **EP 4 219 603 A1**
(43) Date of publication of application: **02.08.2023**
(21) Application number: 22154112.1
(22) Date of filing: 28.01.2022
(51) Int. Cl.: C08J 3/03, C08F 6/00, C08L 33/10, C08J 3/12, B01D 37/00

(54) **A METHOD FOR PURIFICATION OF ORGANIC WATER-SOLUBLE POLYMERS FROM HYDROPHOBIC CONTAMINANTS**

(71) Applicant: Ustav experimentálnej fyziky SAV, v.v.i., 040 01 Kosice (SK)
(72) Inventor: Sedlák, Marián, 040 01 Ko ice (SK); Rak, Dmytro, 040 23 Ko ice (SK)
(74) Representative: Majlingová, Zuzana

(57) **Abstract**

This invention comprises a method of purification of water-soluble polymers from hydrophobic contaminants to high degrees of purity. This method can be considered as a complementary method to routinely used methods of dialysis and various variants of ultrafiltration capable of the removal of hydrophilic unwanted compounds from water-soluble polymers. The method is based on the separation of hydrophobic contaminants adhered to polymer chains by their ionization in aqueous solution, subsequent nanosegregation of hydrophobic compounds (contaminants) landed in bulk water into nanoparticles/nanodroplets sufficiently stable over time, mechanically strong and stable in shape, with dimensions distinct from polymer chains, and hence removable by filtration using filters with pores capable of retaining nanoparticles/nanodroplets comprising hydrophobic contaminants and permeating polymer chains. The advantage of the given method is the low cost without necessity of expensive equipment, expensive and environmentally unfriendly reactants or highly qualified personnel. The method according to this invention can reduce the content of particular hydrophobic contaminants in polymer to levels between 0.5 and 5 ppm).

## Description

### TECHNICAL FIELD

The invention concerns a method of removal of hydrophobic contaminants from water-soluble polymers.

### BACKGROUND ART

The demand for pure to very pure water-soluble polymers is motivated by their use mainly in pharmaceutical industry, in growing bio-medical applications or in research with a strong need for high-purity polymers. An important group of contaminants is represented by hydrophobic contaminants covering e.g. higher alkanes (paraffins), polycyclic aromatic hydrocarbons (PAHs), phtalates, alkyl esters of fatty acids, long-chain fatty alcohols, etc. Many of them with high health risk like dioxins and polychlorinated biphenyls (PCBs) are listed in the Commission Regulation (EC) No 1881/2006. The source of contaminants in water-soluble polymers is multiple. They originate from impurities in monomers, from impurities in compounds used in polymerization reactions like initiators, quenchers or emulsion stabilizers (surfactants) used in emulsion polymerizations. The secondary sources of contamination are lubricants used in industrial facilities comprising higher alkanes (paraffins) and storage of water-soluble polymers and aqueous polymer solutions in plastic containers with plastic caps which are potential sources of leaking phtalates.

The problem of hydrophobic contaminants in water-soluble polymers is partially overlooked due to the complications in their removal, especially if we think of purifications to high and very high degrees of purity. The most common method used for purification of water-soluble polymers is dialysis. The principle of dialysis is that an aqueous solution of polymer is separated from a large reservoir of clean water by a semipermeable membrane with pore sizes enabling passage of small molecules but not passage of polymers through the membrane. The driving force of this passage is the difference between concentration (activity) of particular compounds in polymer solution and in the external water reservoir, respectively. In this way, small molecules diffuse from the polymer solution to the external reservoir while water in the external reservoir is multiply exchanged. However, small molecules must be soluble (solvated) in order to be able to diffuse through the membrane out of the polymer solution. In other words, they must be hydrophilic. Other methods of purification of water-soluble polymers like ultrafiltration/diafiltration or tangential flow filtration (also called cross-flow filtration) work on a similar principle. The small molecules get out from aqueous polymer solution through pores of adequate size, just this passage is not spontaneous like in dialysis, but enhanced by external force such as solution flow, crossflow, external pressure or gravitational force. Again, small molecules must be soluble (solvated) in aqueous environment to be able to be directed out of the polymer solution in such a way. Other methods must be used for removal of hydrophobic contaminants.

Reprecipitation is a method based on addition of water-miscible organic solvent to an aqueous polymer solution causing precipitation of polymer, separation of the precipitate, drying, addition of water, dissolution and repeating the cycle. Hydrophobic impurities are partially dissolved in the mixed solvent. The disadvantages of reprecipitation are: the need for large volumes of pure and expensive solvents, impossibility or difficulty to use it for liquid polymers like poly(ethylene glycol), poly(propylene glycol), poly(tetrahydrofuran), poly(dimethylsiloxane), and poly(methylphenylsiloxane), and hazardous character of certain solvents. In general, it is more suitable for gross purification of polymers from larger amounts of contaminants. Recrystallization is not used for polymers since a vast majority of polymers do not crystalize.

Extraction is a commonly used purification method of compounds which allows the separation of compounds based on their different solubility in immiscible solvents. It can be automated by countercurrent extraction. Extraction is, however, slow for polymers and is not commonly used. The disadvantages are the need for pure, expensive as well as often harmful solvents, relatively small volumes (weights) of compounds, and relatively high operational costs.

Adsorption of contaminants on solid surfaces is used more in treatment of pure water while the presence of polymers in solution represents a complicating factor.

Preparative chromatography is a common method used for the purification of organic compounds. It provides a very efficient separation of individual compounds. The disadvantages, however, are possibility of separation of only relatively small volumes (weights) of compounds, the high cost of equipment, expensive operation (the need for exchange of mobile and stationary phase) and the need for highly qualified staff to operate the relatively sophisticated and expensive equipment.

Current state of the art does not disclose how hydrophobic low molar mass nonpolymeric molecules (contaminants) behave in aqueous solutions of water-soluble polymers at contaminant concentrations of interest (approximately from 0.0005 wt.% to 0.1 wt.% of contaminants in polymer). Whether they adhere to polymer chains or they macroscopically phase-separate or they mesoscopically separate. This, of course, makes any strategy towards removal of hydrophobic contaminants non-obvious. In addition, details about these hypothetical possibilities are not known. What would be the character of the potential macrophase (liquid or solid)? If liquid, then liquid would flow through filters and would not be removable by filtration. How big would be potential mesoscopic structures comprising hydrophobic contaminants? How will polymer chains interact with hydrophobes during their nucleation/growth/aggregation? Would they significantly differ in size from polymer chains so that they could be separated from polymers on the basis of size exclusion? How mechanically firm and shape-stable would be mesoscopic structures? Could they be retained by filters or they would pass through filter pores upon breaking up into smaller pieces or upon a shape change? Current state of the art does not disclose how the presence of polymers influence answers to these questions.

The present patent application is loosely related to our previous application (EP17160213.9). However, the application EP17160213.9 deals solely with purification of low molar mass (nonpolymeric) compounds. It also does not deal with the purification of polysalts. Neither polysalts nor low molar mass salts. This previous invention, alone or in combination with any other document(s), does not teach anything about whether (and at which conditions or via which routes) can hydrophobic contaminants be removed from polymers.

The aim of this invention is to provide a simple and non-expensive method of purification of organic water-soluble polymers from hydrophobic contaminants to high degrees of purity, which utilizes environmentally-friendly solvents.

### SUMMARY OF THE INVENTION

A method of purification of organic water-soluble polymers from hydrophobic contaminants with degree of hydrophobicity expressed via logarithm of the octanol/water partition coefficient at least 4.0, according to the present invention comprises the following steps:
a) preparing an aqueous solution of polymer containing hydrophobic contaminants with minimum concentration of polymer in water at least 0.01 wt.%, while the maximum concentration is given by the ability of the given polymer solution to permeate through the filter used in the step c) and varies with the type of the polymer and its molecular mass;
b) ionization of monomeric units in polymer chains by adding a first pH-modifying compound into the solution, in such an amount that 20% to 100% of monomeric units become ionized, thereby releasing the hydrophobic contaminants from polymer chains and creating stable nano-objects comprising hydrophobic contaminants, said nanoparticles having sufficient size, mechanical strength and shape-stability to be removed by filtration, without necessity of addition of any additives as stabilizers;
c) removal of the nano-objects from the solution using chemically resistant nanoporous filter with effective pore size equal or less than 500 nm, wherein the minimum effective pore size is defined by the ability of the polymer to permeate through the filter, and filtration pressure from 10 kPa to 10 MPa;
d) conversion of polymer back to the nonionized form by adding an appropriate amount of the second pH-modifying compound into the solution;
e) removal of low molar mass salt originating from the ionization-deionization cycle from the polymer solution;
f) removal of water from the polymer solution.

The method is suitable for hydrophobic contaminants with the degree of hydrophobicity expressed via logarithm of the octanol/water partition coefficient log P > 4.0. List of removable hydrophobic contaminants identified in our examples via the GC-MS HS-SPME method (Gas Chromatography - Mass Spectrometry Head Space Solid-Phase Micro Extraction) is in Table 2, together with values of log P. The method is applicable to a broad range of concentrations of hydrophobic contaminants from 0.0005% to 5%, but its use is especially beneficial for the elimination of very low concentrations of hydrophobic contaminants in polymer (from 0.0005% to 0.1 %), i.e. to cleaning of polymers to high degrees of purity (not possible by other methods as for instance reprecipitation). It was shown in our examples by the GC-MS HS-SPME method that model contaminants added to the polymer in concentration 0.025% were reduced in concentration on average 250-times, which corresponds to the lowering the concentration of the contaminant to 0.0001%, i.e. to 1 ppm.

The minimum concentration of polymer in water for which the method is functional is 0.01 wt.%. The maximum polymer concentration that can be used for this method is given by the permeability of the given polymer solution through the filter used in the step c) and varies dramatically with the type of the polymer, its molecular mass, and the pore size of the filter used. Low polymer concentrations are not economically effective (small amount of polymer purified) while very high polymer concentrations may yield problems with slow filtration caused by high viscosity of the polymer solution. The preferred polymer concentration range is therefore 0.1 to 60 wt. %. The most preferred polymer concentration range is from 2.0 wt.% to 7.0 wt.%.

The general rule in the practical application of our method is that the filter selection is realized such that the pore size used is as small as possible, while such a pore size still enables the polymer solution to flow through the filter with (economically) acceptable speed and enables polymer chains to pass through the filter. This is in practice strongly dependent on the chemical composition of the polymer, on its molecular mass, and on the polymer concentration used. Since the chemical composition of the polymer and its molecular mass are fixed for the given polymer to be purified, the parameter that can be varied is polymer concentration. For instance, when purifying polymer with high molecular mass, polymer concentration must be used rather low and vice versa. The selected concentration is essentially inversely proportional to polymer molecular mass. The lower limit of pore size of the filter is chosen essentially by a simple trial and error method. The upper limits of pore sizes are numerically given. Better results can be achieved by repeated filtration using the same pore size filter. In general, the smaller the pore size, the better the removal of hydrophobic contaminants. In general, the higher the overall concentration of hydrophobic contaminants the larger the average size of nano-objects, consequently, the larger pore size can be used.

It has been surprisingly found out that if the polymer in aqueous solution of step a) is ionized, the hydrophobic contaminants, previously stuck to the polymer chain, are released into the aqueous solution. After releasing the hydrophobic contaminants into the solution, they are subsequently mesoscopically segregated into nano-objects (nanoparticles or nanodroplets according to the nature of contaminants) having a diameter from 120 nm to 600 nm. The reason of ionization is therefore to promote the separation of hydrophobic contaminants from polymer chains upon their charging, followed by subsequent mesoscopic segregation of contaminants outside polymer chains into discreet nanostructures with sizes (diameters) from 120nm to 600nm.

An essential feature of the method according to this invention is the fact that the separation of contaminants from polymer chains and segregation into discrete, relatively stable in shape and time and mechanically strong (subsequently filterable) nanoparticles occurs only after the addition of water and pH modifiers like NaOH and HCI, without need of the addition of any organic chemicals (stabilizers, surfactants) which could present a secondary contamination by hydrophobic contaminants and would also increase the cost of purification. Water, NaOH and HCI are due to their nature practically free of hydrophobic contaminants, as documented in the Examples. The separation of nanoparticles of segregated hydrophobic contaminants from polymer is possible based on the fact that the above-mentioned procedure results in sufficiently differing sizes of nanoparticles comprising hydrophobic contaminants and polymer chains, respectively. Important fact is that the nanoparticles contain virtually the entire contaminant originally contained in the polymer (in other words the concentration of contaminants in the solution outside the nanoparticles is almost zero).

The amount of the first pH-modifying compound is such that the percentage of resulted ionized monomers in polymer chains is from 20% to 100%, preferably from 70% to 100%. The correct amount, depends form particular polymer used.

The first pH-modifying compound can be a low molar mass acid or base such as HCI and NaOH or a pH buffer. The ionization of monomeric units in polymer is a known process and is performed via addition of a strong low molar mass base (like for instance NaOH) when ionizing polyacids (like for instance PMA) or via addition of a strong low molar mass acid (like for instance HCI) when ionizing polybases (like for instance PEI or PAIAm). Quantitatively, a 100% ionization is achieved by adding an equimolar amount of acid/base. Equimolar with respect to monomer concentration. Similarly, 50% ionization is achieved by adding half of an equimolar amount of acid/base, etc. Ionization can be achieved also by using pH buffers. In this case, however, a relationship between pH and degree of ionization must be known for the given polymer.

While the maximum effective pore size of the filter is 500 nm, the minimum effective pore size is defined only by the ability of the polymer to pass through the filter. The minimum effective pore size is at the same time the optimum effective pore size. In other words, the best performance of the method is achieved when using the smallest pore size that enables polymer to pass through the filter. This strongly depends on the type of polymer, its molecular mass and concentration. According to practical experience, the working range of filter pore sizes is from 20 nm to 500 nm. While the method is functional for filtration pressures from 0.1 to 100 atm., the optimum pressure is from 0.5 atm to 5 atm and depends on parameters such as the pore size, polymer solution viscosity, and the mechanical strength of the filter.

Polymer deionization is performed by adjusting solution pH using a second pH-modifying compounds. The second pH-modifying compound can be selected from the same group of compounds as listed for the first pH-modifying compound but with opposite pH effect.

Removal of low molar mass salt originating from the ionization/deionization cycle can be performed using dialysis or other appropriate known method.

Finally, removal of water from polymer solution can be performed by lyophilization or other appropriate prior art method (conversion of polymer to a solid form).

If the starting polymer (to be purified by the present method) is in the form of an aqueous solution of suitable concentration, then step a) can be omitted.

Likewise, the steps b) and d) (ionization and deionization) can be omitted in the case of polymers in the form of a polysalt which self-ionize in water by self-dissociation as well as in the case of polar polymers that lack ability of ionization while possess permanent partial charges (net atomic charges).

If it is desired that the final product of the method according to the present invention is to be in the form of an ionized polymer aqueous solution, then steps d), e) and f) can be omitted.

If it is desired that the final product of the method according to the present invention is to be in the form of a nonionized polymer aqueous solution then steps e) and f) or only step f) can be omitted.

All steps of the presented method take place in a temperature range in which the polymer is soluble, not thermally degraded and the system is in a liquid phase.

The advantages of the method according to the invention are:
The method enables purification of water-soluble polymers from hydrophobic contaminants to very high degrees of purity. The content of a hydrophobic contaminant in the polymer can be reduced after purification to a value of less than 1 ppm.

The method enables preparation of very large volumes (weights) of purified compounds. Equipment (technology) and material used in the method are cost-effective, and also the operational costs are low. There is no need for a highly skilled staff.

The method can be used as a supplementary method to common methods of purification capable of purification of water-soluble polymers from hydrophilic contaminants like dialysis and various variants of filtration methods based on permeation of low molar mass hydrophilic contaminants through ultrafiltration membranes.

The method according to the invention can be used for purification of the following water-soluble polymers/polymer groups (list is not limited to the listed items):
- Polyanions (poly(methacrylic acid), sodium poly(styrenesulfonate))
- Polycations (poly(ethyleneimine), poly(allylamine))
- Strong polyelectrolytes (sodium poly(styrenesulfonate))
- Weak polyelectrolytes (poly(methacrylic acid), poly(ethyleneimine), poly(allylamine))
- Non-ionizable polymers with polar monomer units carrying partial charges / net atomic charges (poly(vinylpyrrolidone))
- Polymers naturally contaminated by a broad spectrum of contaminants
- Polymers intentionally contaminated in a controlled manner with known hydrophobic contaminants added in known quantities
- Polymers with molecular masses spanning two orders of magnitude (from 2 kDa to 200 kDa).

### BRIEF DESCRIPTION OF DRAWINGS

Fig. 1 shows the angular dependence of intensity of laser light scattered from nanoparticles of segregated contaminants in aqueous solution before filtration and after filtration by nanoporous filter in the process of purification of PMA, M_{w} = 70 kDa.
Fig. 2 shows comparison of contaminants content in aqueous solution of PMA, M_{w} = 70 kDa, before filtration and after filtration by nanoporous filter, respectively. Obtained by GC-MS HS-SPME method.
Fig. 3 shows the angular dependence of intensity of laser light scattered from nanoparticles of segregated contaminants in aqueous solution before filtration and after filtration by nanoporous filter in the process of purification of fully ionized PMA, M_{w} = 70 kDa.
Fig. 4 shows comparison of contaminants content in aqueous solution of fully ionized PMA, M_{w} = 70 kDa, before filtration and after filtration by nanoporous filter, respectively. Obtained by GC-MS HS-SPME method.
Fig. 5 shows the angular dependence of intensity of laser light scattered from nanoparticles of segregated contaminants in aqueous solution before filtration and after filtration by nanoporous filter in the process of purification of PMA, M_{w} = 170 kDa, which was intentionally contaminated in a controlled manner by known amounts of known hydrophobic contaminants.
Fig. 6 shows comparison of contaminants content in aqueous solution of an intentionally contaminated PMA, M_{w} = 170 kDa, before filtration and after filtration by nanoporous filter, respectively. Obtained by GC-MS HS-SPME method.
Fig. 7 shows the angular dependence of intensity of laser light scattered from nanoparticles of segregated contaminants in aqueous solution before filtration and after filtration by nanoporous filter in the process of purification of PMA, M_{w} = 170 kDa, which was intentionally contaminated in a controlled manner by known amounts of known hydrophobic contaminants. Prior to measurement, PMA was fully ionized after dissolution.
Fig. 8 shows comparison of contaminants content in aqueous solution of an intentionally contaminated PMA, M_{w} = 170 kDa, before filtration and after filtration by nanoporous filter, respectively. Prior to measurement, PMA was fully ionized after dissolution. Obtained by GC-MS HS-SPME method.
Fig. 9 shows the angular dependence of intensity of laser light scattered from nanoparticles of segregated contaminants in aqueous solution before filtration and after filtration by nanoporous filter in the process of purification of NaPSS, M_{w} = 94.6 kDa.
Fig. 10 shows comparison of contaminants content in aqueous solution of NaPSS, M_{w} = 94.6 kDa, before filtration and after filtration by nanoporous filter, respectively. Obtained by GC-MS HS-SPME method.
Fig. 11 shows the angular dependence of intensity of laser light scattered from nanoparticles of segregated contaminants in aqueous solution before filtration and after filtration by nanoporous filter in the process of purification of NaPSS, M_{w} = 200 kDa. NaPSS was intentionally contaminated in a controlled manner by known amounts of known hydrophobic contaminants.
Fig. 12 shows comparison of contaminants content in aqueous solution of NaPSS, M_{w} = 200 kDa, before filtration and after filtration by nanoporous filter, respectively. NaPSS was intentionally contaminated in a controlled manner by known amounts of known hydrophobic contaminants.
Obtained by GC-MS HS-SPME method.
Fig. 13 shows the angular dependence of intensity of laser light scattered from nanoparticles of segregated contaminants in aqueous solution before filtration and after filtration by nanoporous filter in the process of purification of PEI, M_{w} = 2.0 kDa, intentionally contaminated in a controlled manner by known amounts of known hydrophobic contaminants. PEI was fully ionized prior to measurement.
Fig. 14 shows comparison of contaminants content in aqueous solution of intentionally contaminated PEI, M_{w} = 2.0 kDa, before filtration and after filtration by nanoporous filter, respectively. PEI was fully ionized prior to measurement. Obtained by GC-MS HS-SPME method.
Fig. 15 shows the angular dependence of intensity of laser light scattered from nanoparticles of segregated contaminants in aqueous solution before filtration and after filtration by nanoporous filter in the process of purification of PAIAm, M_{w} = 15.0 kDa, intentionally contaminated in a controlled manner by known amounts of known hydrophobic contaminants. PAIAm was fully ionized prior to measurement.
Fig. 16 shows comparison of contaminants content in aqueous solution of intentionally contaminated PAIAm, M_{w} = 15.0 kDa, before filtration and after filtration by nanoporous filter, respectively. PAIAm was fully ionized prior to measurement. Obtained by GC-MS HS-SPME method.
Fig. 17 shows the angular dependence of intensity of laser light scattered from nanoparticles of segregated contaminants in aqueous solution before filtration and after filtration by nanoporous filter in the process of purification of PVP, M_{w} = 29.0 kDa, intentionally contaminated in a controlled manner by known amounts of known hydrophobic contaminants.
Fig. 18 shows comparison of contaminants content in aqueous solution of intentionally contaminated PVP, M_{w} = 29.0 kDa, before filtration and after filtration by nanoporous filter, respectively. Obtained by GC-MS HS-SPME method.

### DETAILED DESCRIPTION

All examples were realized at temperature T = 25°C.

### Example 1

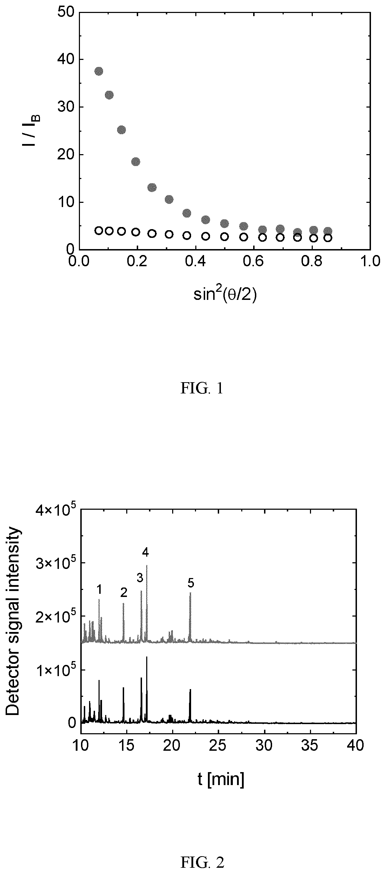

Poly(methacrylic acid) (PMA) with weight-average molecular mass M_{w} = 70 kDa was dissolved in water at a concentration of 2 wt. %. Dissolution of polymer caused generation of nanoparticles/nanodroplets in solution formed by segregated hydrophobic contaminants contained in PMA. Their presence was quantified using laser light scattering (Fig. 1). The plot in Fig. 1 shows angular dependencies of intensity of light scattered from nanoparticles I normalized to an angularly-independent scattering intensity from a benzene standard I_{B}. θ is the scattering angle (the angle between the primary laser beam and the beam of the detected scattered light). While a complete quantitative analysis of light scattering data is quite a complex procedure, for the purpose of the demonstration of examples of invention embodiments, we can simplify the interpretation of light scattering data stating that the extrapolated value of I/IB at zero scattering angle is proportional to the extent of hydrophobic contaminants nanosegregation and the slope of the angular dependence is proportional to the size of nanoparticles/nanodroplets. Gray solid circles correspond to the measurement of polymer solution before filtration while black hollow circles correspond to the measurement after filtration by nanoporous filter with an effective pore diameter of 0.1 µm at a filtration pressure of 5 atm. The size of nanoparticles before filtration was determined from the slope of the angular dependence of scattered light as R = 70 nm (radius of nanoparticles), D = 140 nm (diameter of nanoparticles). Filtration resulted in a reduced zero-angle scattering intensity indicating a partial removal of nanoparticles and a flat angular dependence meaning that the size of residual aggregates in solution is at the resolution limit of the light scattering apparatus, i.e. R ~ 25nm. Contaminants in polymer solution were characterized in terms of chemical composition by means of GC-MS HS-SPME method (Gas Chromatography - Mass Spectrometry Head Space Solid-Phase Micro Extraction). Fig. 2 shows the GC-MS HS-SPME elugrams before filtration of the mixture (top gray curve) and after filtration of the mixture (bottom black curve). The detector signal intensity is in relative units. t is the elution time. The GC-MS elugrams in Fig. 2 as well as in all other elugrams in this patent application are presented after subtraction of the elugram of the solvent (subtraction of a so called blank elugram). For the sake of clarity and good visibility, the elugrams of filtered and unfiltered samples are mutually vertically displaced in all figures in this patent application (the elugrams of unfiltered samples are shifted up to avoid overlap of elugrams). Main compounds yielding substantial peaks in elugrams in Fig. 1 were identified as follows: 1 - dodecane, 2 - tridecane, 3 - bifenyl, 4 - tetradecane, 5 - hexadecane. In addition to these compounds, there are many other hydrophobic compounds present that yield smaller peaks. A nonpolar column was used for all gas chromatography analyses in this patent application. As a rule, polar substances elute at the beginning of elugrams while nonpolar hydrophobic substances elute at longer times. The decrease of detector signal intensity after filtration corresponds to the degree of elimination of the particular contaminant. The elugrams in Fig. 2 show that the content of hydrophobic compounds is reduced after filtration only very weakly, on average by 20%.

### Example 2

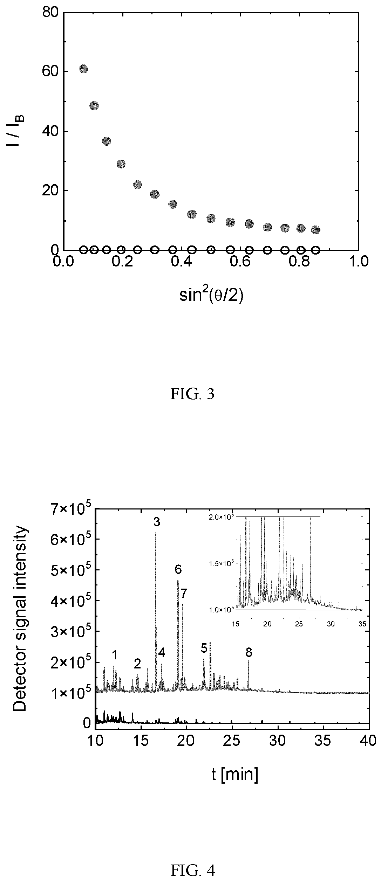

The procedure was the same as in Example 1. After polymer dissolution, sodium hydroxide was added to the solution in equimolar concentration (molar concentration of NaOH equal to monomer molar concentration) to ionize polymer chains (convert PMA to its sodium salt). Fig. 3 and Fig.4 document measurements by static laser light scattering and GC-MS HS-SPME, respectively. The meaning of symbols is the same as in Figs. 1 and 2 and is maintained in all further figures in this patent application. There are two significant differences compared to the case of non-ionized polymer described in Figs. 1 and 2, namely a higher presence of hydrophobic contaminants segregated in nanoparticles/nanodroplets and, very importantly, a much lower concentration of hydrophobic contaminants in solution after filtration. The concentration of the main identified contaminants (1 - dodecane, 2 - tridecane, 3 - bifenyl, 4 - tetradecane, 5 - hexadecane, 6 - dodecanol, 7 - 2-tridecanone 8 - isopropyl tetradecanoate) is reduced on average 100-times after filtration (based on areas under corresponding peaks in elugrams). It is shown that ionization of the polymer leads to a better separation of hydrophobic compounds from polymer chains, better nanosegregation in solution, and subsequently to an incomparably better removability of hydrophobic contaminants by filtration. Water is then removed from the filtered polymer solution by lyophilization yielding a purified polymer in a powder form. The inset in Fig. 4 shows that in addition to sharp peaks (spikes) that can be attributed to specific compounds, there is also a broad peak present spanning from ca. 15 min. to 30 min., showing that the polymer contains before filtration a mixture of a very large number of hydrophobic contaminants which in many cases elute simultaneously.

### Example 3

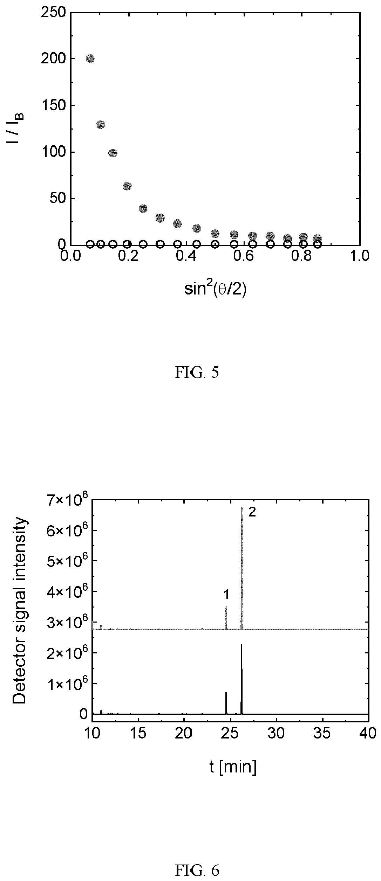

Poly(methacrylic acid) (PMA) with weight-average molecular mass M_{w} = 170 kDa, with extremely low concentration of naturally occurring contaminants, was intentionally contaminated with the following hydrophobic contaminants: octadecane (concentration 0.025%) and dichlorobiphenyl PCB-14 (concentration 0.025%). Overall concentration of contaminants in polymer was 0.050%. Added model contaminants were chosen according to their significance in terms of the potency of occurrence and in terms of health harmfulness. Hydrophobicity of these contaminants can be characterized by means of logarithm of the octanol/water partition coefficient as log P = 10.32 for octadecane and log P = 5.41 for polychlorinated biphenyl PCB-14, respectively. The contaminated PMA was dissolved in water to form a 2 wt. % aqueous solution. Subsequently, the procedure was the same as in Example 1. Fig. 5 documents by means of static laser light scattering measurements the presence of nanoparticles in the solution of contaminated PMA and their partial removal by filtration through a nanoporous filter with an effective pore diameter of 0.1 µm at a filtration pressure of 5 atm. Fig. 6 shows elugrams obtained by the GC-MS HS-SPME method focused on the chemical composition of the solution before and after filtration, in particular on the presence of intentionally added contaminants. Identified compounds in the solution: 1 - PCB-14, 2 - octadecane. By comparison of areas of corresponding peaks before and after filtration, it is seen that the octadecane content was reduced by 49% and the polychlorinated biphenyl PCB-14 content by 6%, respectively.

### Example 4

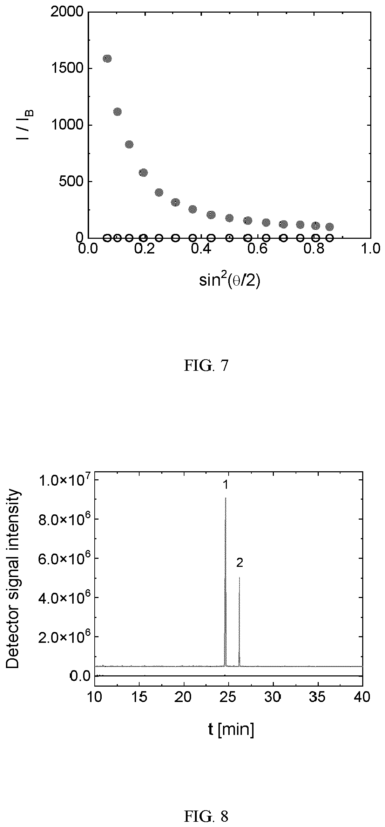

The procedure was the same as in Example 3. After polymer dissolution, sodium hydroxide was added to the solution in equimolar concentration (molar concentration of NaOH equal to monomer molar concentration) to ionize polymer chains (convert PMA to its sodium salt). Fig. 7 and Fig.8 document measurements by static laser light scattering and GC-MS HS-SPME, respectively. There are two significant differences compared to the case of non-ionized polymer described in Example 3, namely a higher presence of hydrophobic contaminants segregated in nanoparticles/nanodroplets and, very importantly, a much lower concentration of hydrophobic contaminants in solution after filtration. Based on areas under corresponding peaks in elugrams, the concentration of the identified contaminants (1 - PCB-14, 2 - octadecane) was reduced after filtration 210-times (PCB-14) and 283-times (octadecane), respectively. Example 4 shows that polymer ionization leads to an orders of magnitude better removability of hydrophobic contaminants by filtration.

**Table 1. Peak areas from GC-MS HS-SPME elugrams corresponding to intentionally added hydrophobic contaminants dichlorobiphenyl (PCB-14) and octadecane. Peak areas are in arbitrary units.**

| | PCB-14 peak area, a.u. | octadecane peak area, a.u. |
|---|---|---|
| PMA 170kDa non-ionized, prior to filtration | 9.31 | 241.06 |
| PMA 170kDa non-ionized, after filtration | 8.78 | 124.15 |
| PMA 170kDa ionized, prior to filtration | 209.65 | 283.23 |
| PMA 170kDa ionized, after filtration | 1.0 | 1.0 |

### Example 5

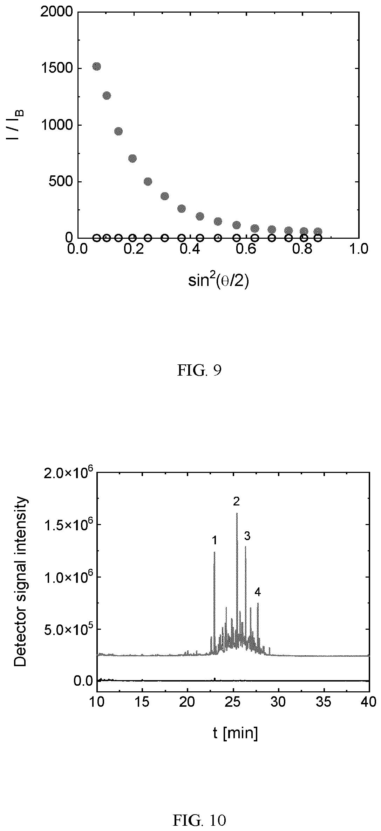

Sodium poly(styrene sulfonate) (NaPSS) of a p.a. grade with weight-average molecular mass M_{w} = 96.4 kDa was dissolved in water at a concentration of 5 wt. %. Since NaPSS is a strong polyelectrolyte fully dissociating in water, it becomes ionized by sole dissolution in water. This causes generation of nanoparticles/nanodroplets in solution formed by nanosegregated hydrophobic contaminants contained in the NaPSS polymer. The presence of nanoparticles/nanodroplets was quantified using the laser light scattering method (Fig. 9). The size of nanoparticles was determined from the angular dependence of scattered light as a size distribution ranging from R ~ 100 nm to R ~ 300 nm. Fig. 9 also documents practically full removal of these nanoparticles/nanodroplets by filtration through a nanoporous filter with an effective pore diameter of 0.1 µm at a filtration pressure of 5 atm. Contaminants in solution were characterized also in terms of their chemical composition by means of GC-MS HS-SPME performed before and after filtration (Fig. 10). Hydrophobic compounds before filtration are reflected in the wide peak eluting from 22 min to 30 min. This wide peak corresponds to a wide spectrum of hydrophobic contaminants dominated by a mixture of alkylnaphthalenes such as tert-butylnaphthalene and di tert-butylnaphthalene (1), derivatives of dehydroabietol and derivatives of equilin such as equilin benzoate (2), geranyl-p-cymene (3), and mixture of other aliphatic and aromatic hydrocarbons (4). The content of hydrophobic contaminants after filtration is below the detection limit of the GC-MS HS-SPME method

### Example 6

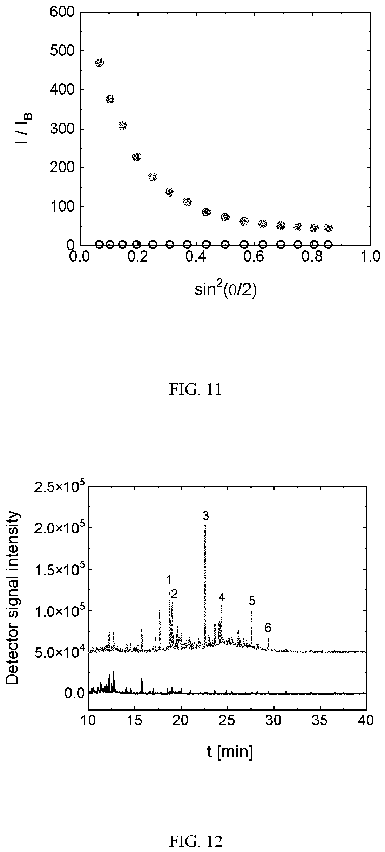

The procedure was the same as in Example 5. NaPSS with M_{w} = 200 kDa was used instead of NaPSS with M_{w} = 96.4 kDa. Instead of the concentration of NaPSS 5 wt. %., the concentration of NaPSS was 2 wt. %. The presence of nanoparticles/nanodroplets comprising hydrophobic contaminants was quantified using the laser light scattering method (Fig. 11). Fig. 11 also documents practically full removal of these nanoparticles/nanodroplets by filtration through a nanoporous filter with an effective pore diameter of 0.2 µm at a filtration pressure of 2 atm. Contaminants in solution before and after filtration were characterized also in terms of their chemical composition by means of GC-MS HS-SPME method (Fig. 12). Hydrophobic compounds present in unfiltered sample elute from ca. 17 min. to 30 min. and comprise a mixture of a broad spectrum of compounds yielding a very wide peak from ca. 17 min. to 30 min. with several compounds present at higher concentrations yielding distinct spikes in the elugram: 1 - di tert-butyl hydroquinone, 2 - di tert-butylhydroxytoluene, 3 - isopropyl dodecanoate, 4 - 2-ethylhexyl benzoate, 5 - di-isobutyl phtalate, 6 - di-butyl phtalate. The amount of hydrophobic contaminants in filtered sample is at the detection limit of GC-MS HS-SPME.

### Example 7

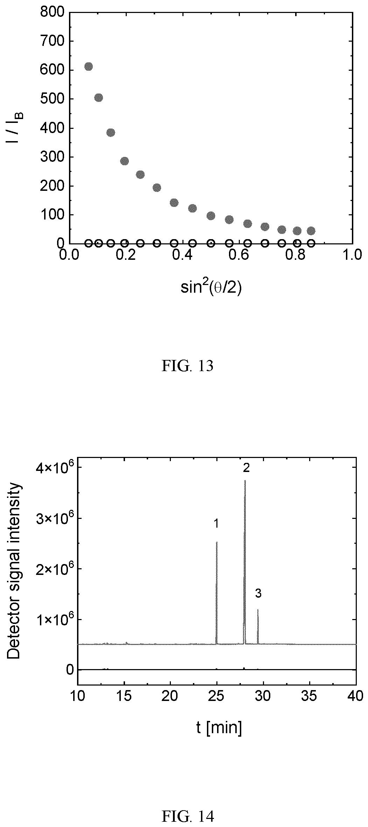

Poly(ethyleneimine) (PEI) with weight-average molecular mass M_{w} = 2.0 kDa with extremely low concentration of contaminants, was contaminated in a controlled manner with the following hydrophobic contaminants: ethyl dodecanoate (concentration 0.025%), dichlorobiphenyl PCB-14 (concentration 0.025%), and octadecane (concentration 0.025%). Overall concentration of contaminants in polymer was 0.075%. Added model contaminants were chosen according to their significance in terms of the potency of occurrence and in terms of health harmfulness. Hydrophobicity of these contaminants can be characterized by means of logarithm of the octanol/water partition coefficient as log P = 6.00 for ethyl dodecanoate, log P = 5.41 for polychlorinated biphenyl PCB-14, and log P = 10.32 for octadecane, respectively. The contaminated PEI was subsequently dissolved in water to form a 2 wt. % aqueous solution. After polymer dissolution, HCI was added to the solution in equimolar concentration (molar concentration of HCI equal to monomer molar concentration) to ionize polymer chains. Fig. 13 documents by means of static laser light scattering measurements the presence of nanoparticles in the solution of contaminated PEI and their removal by filtration through a nanoporous filter with an effective pore diameter of 0.1 µm at a filtration pressure of 5 atm. Fig. 14 shows elugrams obtained by the GC-MS HS-SPME method. Identified compounds in the solution: 1 - ethyl dodecanoate, 2 - PCB-14, 3 - octadecane. By comparison of areas of corresponding peaks before and after filtration, it is seen that the ethyl dodecanoate content was reduced 811-times, the polychlorinated biphenyl PCB-14 content was reduced 209-times, and the octadecane content was reduced 274-times, respectively.

### Example 8

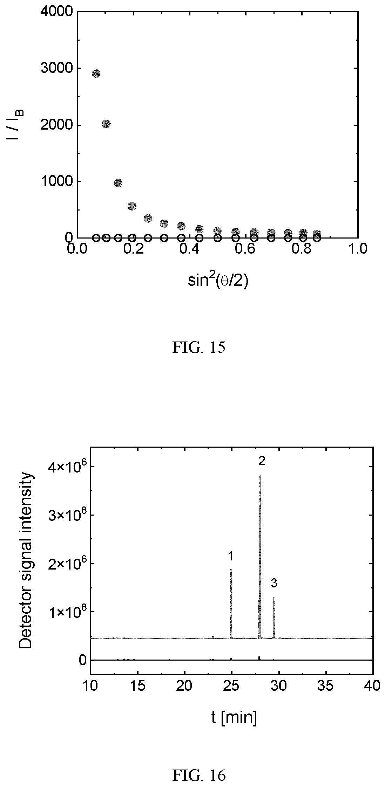

Poly(allylamine) (PAIAm) with weight-average molecular mass M_{w} = 15.0 kDa with extremely low concentration of contaminants, was contaminated in a controlled manner with the following hydrophobic contaminants: ethyl dodecanoate (concentration 0.025%), dichlorobiphenyl PCB-14 (concentration 0.025%), and octadecane (concentration 0.025%). Overall concentration of contaminants in polymer was 0.075%. The contaminated PEI was subsequently dissolved in water to form a 2 wt. % aqueous solution. After polymer dissolution, HCI was added to the solution in equimolar concentration (molar concentration of HCI equal to monomer molar concentration) to ionize polymer chains. Fig. 15 documents by means of static laser light scattering measurements the presence of nanoparticles in the solution of contaminated PAIAm and their removal by filtration through a nanoporous filter with an effective pore diameter of 0.2 µm at a filtration pressure of 3 atm. Fig. 16 shows elugrams obtained by the GC-MS HS-SPME method. Identified compounds in the solution: 1 - ethyl dodecanoate, 2 - PCB-14, 3 - octadecane. By comparison of areas of corresponding peaks, it is seen that the ethyl dodecanoate content was reduced 60-times, the polychlorinated biphenyl PCB-14 content was reduced 68-times, and the octadecane content was reduced 71-times, respectively.

### Example 9

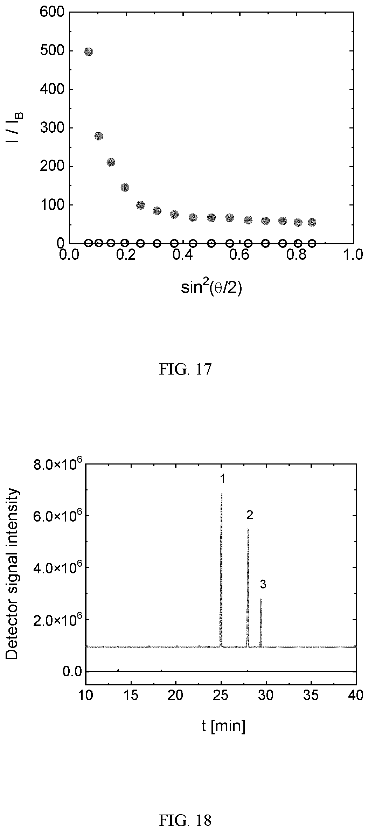

Poly(vinylpyrrolidone) (PVP) with weight-average molecular mass M_{w} = 29 kDa, with extremely low concentration of contaminants, was contaminated in a controlled manner with the following hydrophobic contaminants: ethyl dodecanoate (concentration 0.025%), dichlorobiphenyl PCB-14 (concentration 0.025%), and octadecane (concentration 0.025%). Overall concentration of contaminants in polymer was 0.075%. Added model contaminants were chosen according to their significance in terms of the potency of occurrence and in terms of health harmfulness. The contaminated PVP was subsequently dissolved in water to form a 2 wt. % aqueous solution. PVP is not an ionizable polymer. However, its monomer units are highly polar with partial charges (net atomic charges) on oxygen and nitrogen, respectively. Therefore, no ionization is necessary to obtain good removal of hydrophobic contaminants. Fig. 17 documents by means of static laser light scattering measurements the presence of nanoparticles in the solution of contaminated PVP and their removal by filtration through a nanoporous filter with an effective pore diameter of 0.2 µm at a filtration pressure of 3 atm. Fig. 18 shows elugrams obtained by the GC-MS HS-SPME method focused on the chemical composition of the solution, in particular on the presence of added contaminants. Identified compounds in the solution: 1 - ethyl dodecanoate, 2 - PCB-14, 3 - octadecane. By comparison of areas of corresponding peaks before and after filtration, it is seen that the ethyl dodecanoate content was reduced 360-times, the polychlorinated biphenyl PCB-14 content was reduced 144-times, and the octadecane content was reduced 202-times, respectively.

**Table 2. Contaminants from Examples 1 to 9 which were removed from polymers by the presented method of purification and which were namely identified in GC-MS HS-SPME elugrams. The degree of hydrophobicity of contaminants is expressed via logarithm of the octanol/water partition coefficient.**

| CONTAMINANT | log P |
|---|---|
| bifenyl | 4.00 |
| di tert-butylhydroquinone | 4.02 |
| di-isobutyl phtalate | 4.46 |
| di-butyl phtalate | 4.82 |
| dichlorobiphenyl (PCB 14) | 5.41 |
| dodecanol | 5.13 |
| tert-butylnaphthalene | 5.14 |
| 2-tridecanone | 5.16 |
| di tert-butylhydroxytoluene | 5.32 |
| equilin benzoate | 5.63 |
| 2-ethylhexyl benzoate | 5.73 |
| ethyl dodecanoate | 6.00 |
| dehydroabietol | 6.35 |
| isopropyl dodecanoate | 6.37 |
| di tert-butyl naphtalene | 6.83 |
| dodecane | 7.13 |
| isopropyl tetradecanoate | 7.43 |
| tridecane | 7.66 |
| tetradecane | 8.19 |
| geranyl-p-cymene | 8.25 |
| hexadecane | 9.26 |
| octadecane | 10.32 |

### Industrial applicability

The application area of the given method is very wide - can be applied everywhere where purity of water-soluble polymers matters. Especially in the pharmaceutical industry, in bio-medical applications and in the production of pure polymers for special and scientific applications.

## Claims

1. A method for purification of organic water-soluble polymers from hydrophobic contaminants with degree of hydrophobicity expressed via logarithm of the octanol/water partition coefficient at least 4.0, **characterized in that** the method includes the following steps:
a) preparing an aqueous solution of polymer containing hydrophobic contaminants with minimum concentration of polymer in water at least 0.01 wt.%, while the maximum concentration is given by the ability of the given polymer solution to permeate through the filter used in the step c) and varies with the type of the polymer and its molecular mass;
b) ionization of monomeric units in polymer chains by adding a first pH-modifying compound into the solution, in such an amount that 20% to 100% of monomeric units become ionized, thereby releasing the hydrophobic contaminants from polymer chains and creating stable nano-objects comprising hydrophobic contaminants, said nano-objects having sufficient size, mechanical strength and shape-stability to be removed by filtration, without necessity of addition of any additives as stabilizers;
c) removal of the nano-objects from the solution by filtration using chemically resistant nanoporous filter with effective pore size equal or less than 500 nm, wherein the minimum effective pore size is defined by the ability of the polymer to permeate through the filter, and pressure from 10 kPa to 10 MPa;
d) conversion of polymer back to the nonionized form by adding an appropriate amount of a second pH-modifying compound into the solution;
e) removal of low molar mass salt originating from the ionization-deionization cycle from the polymer solution;
f) removal of water from the polymer solution.

2. The method according to claim 1, **characterized in that** the hydrophobic contaminants are selected from the group comprising: dodecane, tridecane, tetradecane, hexadecane, octadecane, bifenyl, 2-tridecanone, isopropyl tetradecanoate, dodecanol, dichlorobiphenyl, ethyl dodecanoate, di tert-butylhydroquinone, di tert-butylhydroxytoluene, isopropyl dodecanoate, 2-ethylhexyl benzoate, diisobutyl phtalate, dibutyl phtalate, geranyl-p-cymene, tert-butylnaphthalene, di tert-butylnaphthalene, alkylnaphthalenes, equilin benzoate, derivatives of equilin, dehydroabietol and its derivatives, mixtures of aliphatic and aromatic hydrocarbons.

3. The method according to claim 1 or 2, **characterized in that** the first and the second pH-modifying compound is a low molar mass acid or low molar mass base or a pH buffer.

4. The method according to any of the claims 1 to 3, **characterized in that** the amount of the first pH-modifying compound added in the step b) is such that 70% to 100% monomeric units in polymer chains are ionized.

5. The method according to any of the claims 1 to 4, **characterized in that** the concentration of polymer in water is from 2.0 wt.% to 7.0 wt.%.

6. The method according to any of the claims 1 to 5 **characterized in that** steps b), d), and e) are omitted if the starting polymer is in the form of a polysalt which self-ionizes in water by self-dissociation, or a polar polymer that lacks ability of ionization while possess permanent partial charges - net atomic charges.

7. The method according to any of the claims 1 to 6 **characterized in that** step a) and optionally also step f) are omitted if the starting polymer is in the form of an aqueous solution of suitable concentration.

8. The method according to any of the claims 1 to 7, **characterized in that** step d) is performed by dialysis or ultrafiltration or tangential flow filtration.

9. The method according to any of the claims 1 to 8, **characterized in that** step f) is performed by lyophilization.

10. The method according to any of the claims 1 to 9 **characterized in that** the total content of the hydrophobic contaminants in polymer is from 0.0005% to 5%, preferably from 0.0005 to 0.1%.

11. The method according to any of the claims 1 to 10 **characterized in that** the maximum effective pore size of the nanoporous filter is 200 nm.

12. The method according to claims 1 - 11 **characterized in that** the filtration pressure in the step c) is 50 kPa to 500 kPa.
